# EUROPEAN PATENT APPLICATION

(11) **EP 4 738 454 A1**
(43) Date of publication of application: **06.05.2026**
(21) Application number: 23943246.1
(22) Date of filing: 25.10.2023
(51) Int. Cl.: H01M 4/36, H01M 4/134

(54) **NEGATIVE ELECTRODE SHEET, SECONDARY BATTERY, AND ELECTRICAL DEVICE**

(30) Priority: 30.06.2023 CN 202310798399
(71) Applicant: Contemporary Amperex Technology Co., Limited, Ningde, Fujian 352100 (CN)
(72) Inventor: WU, Kai, Ningde, Fujian 352100 (CN); WANG, Yuwen, Ningde, Fujian 352100 (CN); YOU, Xingyan, Ningde, Fujian 352100 (CN); BAI, Wenlong, Ningde, Fujian 352100 (CN); YE, Yonghuang, Ningde, Fujian 352100 (CN); WU, Baozhen, Ningde, Fujian 352100 (CN)
(74) Representative: Ziebig Hengelhaupt Intellectual Property Attorneys Patentanwaltskanzlei PartGmbB
(86) International application number: PCT/CN2023/126518
(87) International publication number: WO 2025/000767

(57) **Abstract**

The present application provides a negative electrode plate, a secondary battery, and an electrical apparatus. The negative electrode plate includes a current collector and a negative electrode film layer, where the negative electrode film layer includes a first film layer, provided on one side or both sides of the current collector; and a second film layer, provided on one side of the first film layer away from the current collector; a negative electrode active material of the first film layer and a negative electrode active material in the second film layer each independently include a silicon-based negative electrode material, the silicon-based negative electrode material in the second film layer includes a porous silicon negative electrode material, and a content of the silicon-based negative electrode material in the first film layer is less than a content of the silicon-based negative electrode material in the second film layer. The charging capability and cycling performance of the secondary battery are improved.

## Description

### CROSS-REFERENCE TO RELATED APPLICATIONS

The present application claims the priority of Chinese patent application No. 202310798399.1, filed on June 30, 2023, and entitled "NEGATIVE ELECTRODE PLATE, SECONDARY BATTERY, AND ELECTRICAL APPARATUS", the entire contents of which are incorporated herein by reference.

### TECHNICAL FIELD

The present application relates to the technical field of batteries, and in particular, to a negative electrode plate, a secondary battery, and an electrical apparatus.

### BACKGROUND

Lithium-ion batteries have the advantages such as high energy density, high power density, and long cycle life, and thus are widely used in portable electronic devices such as laptops, mobile phones, digital cameras and other electronic products. In recent years, with rapid development of new energy and clean energy vehicles, higher requirements have been placed on the performance and safety of new power batteries and energy storage batteries, and the demand for batteries to withstand various extreme working conditions is also increasing.

At present, in order to improve the performance of the lithium-ion batteries, many studies are focused on the development and improvement of electrode materials and electrolytes. For example, silicon materials have a higher theoretical specific capacity (>4000 mAh/g), which is much higher (about 10 times) than the limit capacity of graphite, and has a low voltage to lithium. Therefore, the silicon materials are expected to become the first choice for batteries with high energy density. Although using a silicon negative electrode to replace part of the traditional graphite negative electrode can increase the gram capacity of the negative electrode active material, silicon may produce dramatic volume expansion during the lithium intercalation/de-intercalation process, which causes the silicon material to be rapidly pulverized and fall off from the electrode plate during the cycling process, thereby losing contact with the current collector and failing to fully exert the activity of the silicon material.

### SUMMARY OF THE INVENTION

The present application provides a negative electrode plate, a secondary battery, and an electrical apparatus to improve the charging capability and cycling performance of the secondary battery.

In a first aspect of the present application, a negative electrode plate is provided, and includes a current collector and a negative electrode film layer, where the negative electrode film layer includes a first film layer, provided on one side or both sides of the current collector; and a second film layer, provided on one side of the first film layer away from the current collector; a negative electrode active material of the first film layer and a negative electrode active material in the second film layer each independently include a silicon-based negative electrode material, the silicon-based negative electrode material in the second film layer includes a porous silicon negative electrode material, and a content of the silicon-based negative electrode material in the first film layer is less than a content of the silicon-based negative electrode material in the second film layer.

In the negative electrode plate of the present application, the lower-layer first film layer also includes the silicon-based negative electrode material, thereby improving the energy density of the negative electrode plate. At the same time, the content of a silicon-based negative electrode in the first film layer on a lower layer is relatively small, which effectively alleviates the problem of stripping from the current collector caused by pulverization of the silicon-based negative electrode material during the cycling process. The second film layer on a surface layer has the porous silicon negative electrode material, thus effectively avoiding the problem of a reduced gram capacity of a battery caused by the use of pore-forming agents such as porous carbon. In addition, the porous silicon negative electrode material can increase surface layer pores, thereby overcoming the defect that due to damage to the surface layer pores caused by rolling, lithium ions cannot be intercalated into a negative electrode of the electrode plate. Moreover, the content of the silicon-based negative electrode material in the second film layer on an upper layer is greater than the content of the silicon-based negative electrode material in the first film layer on the lower layer, especially the upper layer has the porous silicon negative electrode material, such that lithium is preferentially intercalated in the upper layer, a lithium intercalating path is shorter, the kinetic performance is better, then the charging capability of the negative electrode plate is improved, and lithium precipitation is effectively alleviated, thereby improving the cycling performance of the battery.

In any embodiment of the first aspect, a surface density M1 of the above first film layer is in a range of 4.5 mg/cm² to 20 mg/cm², and a surface density M2 of the second film layer is in a range of 4.5 mg/cm² to 20 mg/cm².

In any embodiment of the first aspect, a weight ratio of the above first film layer to the second film layer is 95:5 to 30:70, and further optionally is 90:10 to 40:60. The synergistic effect of the two film layers is improved.

In any embodiment of the first aspect, porosity of the above first film layer is in a range of 20% to 50%, porosity of the second film layer is 20% to 70%, and porosity of the negative electrode film layer is 20% to 70%, which can not only improve the lithium ion intercalating ability, but also increase the gram capacity of the negative electrode plate.

In any embodiment of the first aspect, a thickness of the above second film layer is 10 µm to 20 µm, and the thickness fully solves the problem that due to rolling, the pores on a surface of the negative electrode plate are crushed.

In any embodiment of the first aspect, a mass content of the silicon-based negative electrode material in the above first film layer is 0.5% to 50%; and/or a mass content of the porous silicon negative electrode material in the second film layer is 0.5% to 70%; and optionally, a mass content of the porous silicon negative electrode material in the negative electrode film layer is 1% to 60%. Thus, the silicon-based negative electrode material in the two film layers can be utilized to increase the gram capacity of the negative electrode plate as much as possible.

In any embodiment of the first aspect, the above second film layer includes the porous silicon negative electrode material, a graphite negative electrode material, a binder, a dispersant, and a conductive agent, and the conductive agent includes one or more of conductive carbon and carbon nanotubes; optionally, a percentage mass content of the porous silicon negative electrode material in the second film layer is 0.5% to 70%; optionally, a percentage mass content of the graphite negative electrode material in the second film layer is 25% to 90%; optionally, a percentage mass content of the binder in the second film layer is 1% to 8%; optionally, a percentage mass content of the dispersant in the second film layer is 0.5% to 2%; optionally, a percentage mass content of the conductive carbon in the second film layer is 0.5% to 5%; and optionally, a percentage mass content of the carbon nanotubes in the second film layer is 0.05% to 2%. The porous silicon negative electrode material and the graphite negative electrode material are combined, the structural stability of the graphite negative electrode material is used to improve the volumetric stability of the second film layer during the cycling process, and the porous silicon negative electrode material is used to improve the gram capacity and lithium ion transmission capacity of the second film layer.

In any embodiment of the first aspect, the above first film layer includes the silicon-based negative electrode material, a graphite negative electrode material, a binder, a dispersant, and a conductive agent, and the conductive agent includes one or more of conductive carbon and carbon nanotubes; optionally, a percentage mass content of the silicon-based negative electrode material in the first film layer is 0.5% to 50%; optionally, a percentage mass content of the graphite negative electrode material in the first film layer is 45% to 97.5%; optionally, a percentage mass content of the binder in the first film layer is 1 % to 3%; optionally, a percentage mass content of the dispersant in the first film layer is 0.3% to 1.5%; optionally, a percentage mass content of the conductive carbon in the first film layer is 0 to 3%; and optionally, a percentage mass content of the carbon nanotubes in the first film layer is 0 to 0.5%. The silicon-based negative electrode material and the graphite negative electrode material are combined, which improves the adhesion stability of the first film layer and the current collector, and can also increase the gram capacity of the first film layer to a certain extent.

In any embodiment of the first aspect, the silicon-based negative electrode material of the above first film layer includes any one or more of the group consisting of a silicon material, a silicon-oxide material, and the porous silicon negative electrode material, and a content of the porous silicon negative electrode material in the first film layer is less than a content of the porous silicon negative electrode material in the second film layer, so as to improve the uniformity of the overall pores of the negative electrode film layer.

In any embodiment of the first aspect, Dv₅₀ of the above porous silicon negative electrode material is between 3 µm and 20 µm, and optionally is between 4 µm and 15 µm; and/or a BET specific surface area of the porous silicon negative electrode material is between 1 m²/g and 30 m²/g, and optionally is between 6 m²/g and 20 m²/g, so as to further improve the volume energy density of the negative electrode plate.

In any embodiment of the first aspect, the above porous silicon negative electrode material includes: a core, where the core is porous silicon, and the porous silicon includes elemental silicon and a compound of silicon, and the compound of silicon includes an oxide of silicon; and a cladding layer, where the cladding layer is cladded on a surface of the core. The porous silicon negative electrode material with a core-shell structure is adopted and can improve the energy density of the negative electrode plate while alleviating the volume expansion of the silicon-based negative electrode material, thereby improving the cycling stability of a battery with high energy density.

In any embodiment of the first aspect, the above cladding layer includes any one or more of a metal compound of silicon, lithium silicate, amorphous carbon, and carbon nanotubes. By cladding one or more of the above materials, the mechanical structure stability or conductivity of the porous silicon negative electrode material can be improved.

In any embodiment of the first aspect, the above cladding layer includes: a first cladding layer, where the first cladding layer is cladded on the surface of the core, and the first cladding layer includes lithium silicate; a second cladding layer, where the second cladding layer is cladded on a surface of the first cladding layer, the second cladding layer includes a metal compound of silicon, and optionally, metal elements of the metal compound of silicon include Ti, Mg, and/or Al; and a third cladding layer, where the third cladding layer is cladded on a surface of the second cladding layer, the third cladding layer includes amorphous carbon, and optionally, a material of the amorphous carbon includes hard carbon and/or soft carbon. The first cladding layer includes lithium silicate which can generate a lithium salt and an inert phase (lithium oxide) during the lithium intercalating process. The generation of the lithium salt can reduce the consumption of lithium ions in a positive electrode active material during the initial lithium intercalating process, such that the battery has higher initial coulombic efficiency. The generation of the inert phase can effectively alleviate volume expansion, thereby improving the cycling performance of the battery. The second cladding layer provided between the first cladding layer and the third cladding layer includes the metal compound of silicon, which has strong mechanical strength, and thus can buffer the volume expansion of the internal silicon material, thereby improving the cycling performance. On the one hand, the third cladding layer can buffer the volume expansion of the first cladding layer, thereby improving the cycling performance. On the other hand, the third cladding layer can improve protection for the first cladding layer, avoid direct contact between the first cladding layer and water, and prevent dissolution and gas generation of lithium silicate in the first cladding layer.

In any embodiment of the first aspect, the above compound of silicon further includes a metal compound of silicon, and the metal compound of silicon is cladded on a surface of the elemental silicon; and optionally, metal elements of the metal compound of silicon include Ti, Mg, and/or Al. Cladding the metal compound of silicon on the surface of the elemental silicon can buffer the volume expansion of the elemental silicon, thereby improving the cycling performance.

In any embodiment of the first aspect, the above cladding layer includes: a first cladding layer, where the first cladding layer is cladded on the surface of the core, and the first cladding layer includes lithium silicate; and a third cladding layer, where the third cladding layer is cladded on a surface of the first cladding layer, the third cladding layer includes amorphous carbon, and optionally, a material of the amorphous carbon includes hard carbon and/or soft carbon. The first cladding layer includes lithium silicate which can generate a lithium salt and an inert phase (lithium oxide) during the lithium intercalating process. The generation of the lithium salt can reduce the consumption of lithium ions in a positive electrode active material during the initial lithium intercalating process, so that the battery has higher initial coulombic efficiency. The generation of the inert phase can effectively alleviate volume expansion, thereby improving the cycling performance of the battery. On the one hand, the third cladding layer can buffer the volume expansion of the first cladding layer, thereby improving the cycling performance. On the other hand, the third cladding layer can improve protection for the first cladding layer, avoid direct contact between the first cladding layer and water, and prevent dissolution and gas generation of lithium silicate in the first cladding layer.

In any embodiment of the first aspect, the above third cladding layer further includes carbon nanotubes, so that the conductivity of the porous silicon negative electrode material is improved, and the carbon nanotubes are utilized to fully restrain the porous silicon negative electrode material, thereby alleviating volume expansion during the charging and discharging process, controlling polarization inside a battery cell of the negative electrode plate, and improving the cycling performance of the battery cell.

In any embodiment of the first aspect, mass of the porous silicon negative electrode material in the above first film layer and the second film layer is m1 and m2, respectively; percentage mass contents of carbon nanotubes of the porous silicon negative electrode material in the first film layer and the second film layer are C1 and C2, respectively; and excluding the carbon nanotubes in the porous silicon negative electrode material, mass of remaining carbon nanotubes in the first film layer and the second film layer is S1 and S2, respectively, the first film layer and the second film layer are a first film layer per unit area and a second film layer per unit area, respectively, and the following relationships: (m2×C2+S2)/M2=(m1×C1+S1)/M1, m2≥m1, S1≥S2, and S2=m1×m2×(C2-C1)/(m2-m1) are satisfied. By utilizing the restrictions of the above relational expression and making full use of the carbon nanotubes, the restraining capacity for the silicon-based negative electrode is further improved, such that the rebound of the negative electrode plate is effectively suppressed, and the polarization of the negative electrode plate is minimized.

In any embodiment of the first aspect, Dv50 of the above elemental silicon is in a range of 0<Dv50≤10 nm; and optionally, the Dv50 of the elemental silicon is in a range of 2 nm<Dv50≤8 nm. The use of the nano-scale elemental silicon is conducive to mixing of the oxide of silicon with the same, which is beneficial to improving the energy density of the battery, and reducing the difficulty of cladding the core structure, thereby improving the cycling stability of the battery.

In any embodiment of the first aspect, a chemical formula of the above oxide of silicon is SiOx, and in the formula, 0<x≤2; and Dv50 of the oxide of silicon is in a range of 2 µm≤Dv50≤13 µm. Therefore, it facilitates mixing with the elemental silicon and improving the energy density of the battery.

In any embodiment of the first aspect, the above lithium silicate includes one or more of Li₂SiO₃, Li₂Si₂O₅, Li₄SiO₄, Li₂Si₃O₇, Li₈SiO₆, Li₆Si₂O₇, Li₄Si₂O₇, Li₂Si₄O₇, and LiSiO₃; optionally, the lithium silicate includes at least Li₂SiO₃, and further optionally, mass of the Li₂SiO₃ is at least 50% of mass of the first cladding layer, and more optionally, the mass of the Li₂SiO₃ is at least 70% of the mass of the first cladding layer. The first cladding layer is enabled to effectively reduce the consumption of the lithium ions in the positive electrode active material during the initial lithium intercalating process, so that the battery has higher initial coulombic efficiency.

In any embodiment of the first aspect, a thickness of the above first cladding layer is 10% to 80% of a particle radius of the porous silicon negative electrode material. Optionally, a thickness of the second cladding layer is 1 nm to 50 nm. Optionally, a thickness of the third cladding layer is 1 nm to 1000 nm, and optionally, is 5 nm to 300 nm. Within the above thickness ranges, particles can effectively alleviate the volume expansion of a negative electrode material while increasing the energy density of the battery, thereby improving the cycling stability of the battery with high energy density.

In a second aspect of the present application, a secondary battery is provided and includes a positive electrode plate, a negative electrode plate, a separator, and an electrolyte solution, where the negative electrode plate is any of the above negative electrode plates. The secondary battery in the present application has a good charging capability, high energy density and a good cycling performance.

A third aspect of the present application provides an electrical apparatus, including a secondary battery, where the secondary battery is selected from the above secondary battery of the present application. The electrical apparatus of the present application has a better safety.

### BRIEF DESCRIPTION OF DRAWINGS

In order to illustrate the technical solutions of embodiments of the present application more clearly, the following briefly introduces the drawings required in the embodiments of the present application. Obviously, the drawings described below show only some embodiments of the present application. Those of ordinary skill in the art can also obtain other drawings according to the drawings without any creative work.
FIG. 1 is a schematic structural view of a negative electrode plate according to an embodiment of the present application.
FIG. 2 is a schematic structural view of a porous silicon negative electrode material according to an embodiment of the present application.
FIG. 3 is a schematic structural view of a porous silicon negative electrode material according to another embodiment of the present application.
FIG. 4 is a schematic structural view of a porous silicon negative electrode material according to a still another embodiment of the present application.
FIG. 5 is a schematic view of a secondary battery according to an embodiment of the present application.
FIG. 6 is an exploded view of the secondary battery according to an embodiment of the present application as shown in FIG. 5.
FIG. 7 is a schematic view of a battery module according to an embodiment of the present application.
FIG. 8 is a schematic view of a battery pack according to an embodiment of the present application.
FIG. 9 is an exploded view of the battery pack according to an embodiment of the present application as shown in FIG. 8.
FIG. 10 is a schematic view of an electrical apparatus in which a secondary battery is used as a power source according to an embodiment of the present application.

In the drawings, the drawings are not drawn to an actual scale.

Description of reference numerals:
01, current collector; 02, first film layer; 03, second film layer;
10, porous silicon negative electrode material; 11, core; 12, first cladding layer; 13, second cladding layer; 14, third cladding layer; 111, elemental silicon; 112, oxide of silicon; 113, metal compound of silicon;
1, battery pack; 2, upper box; 3, lower box; 4, battery module; 5, secondary battery; 51, case; 52, electrode assembly; and 53, top cover assembly.

### DETAILED DESCRIPTION

Embodiments of the present application are described in further detail below in conjunction with the drawings and embodiments. The following detailed description of the embodiments and the drawings are configured to illustrate the principles of the present application by way of example, but should not be configured to limit the scope of the present application, that is, the present application is not limited to the described embodiments.

Hereinafter, embodiments of a negative electrode plate, a secondary battery, and an electrical apparatus of the present application are described in detail and specifically disclosed with reference to the drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. Additionally, when it is stated that a certain parameter is an integer of ≥2, it is equivalent to disclosing that the parameter is, for example, an integer of 2, 3, 4, 5, 6, 7, 8, 9, 10, 11, 12, etc.

Unless otherwise specified, all the embodiments and optional embodiments of the present application can be combined with each other form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), which means that the method may comprise steps (a) and (b) performed in order, or may comprise steps (b) and (a) performed in order. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

### [Secondary battery]

A secondary battery also known as a rechargeable battery or a storage battery refers to a battery that can be used continually by activating an active material in a charging manner after the battery is discharged.

Generally, the secondary battery includes a positive electrode plate, a negative electrode plate, a separator and an electrolyte solution. During charging and discharging of the battery, active ions (e.g., lithium ions) are intercalated and deintercalated back and forth between the positive electrode plate and the negative electrode plate. The separator is provided between the positive electrode plate and the negative electrode plate, and mainly functions to prevent a short circuit between the positive electrode and the negative electrode while allowing active ions to pass through. The electrolyte solution mainly serves to conduct active ions between the positive electrode plate and the negative electrode plate.

### [Negative electrode plate]

In the process of making research on improving the performance of lithium-ion batteries, we have gradually found through lots of research that reasonable structural design of an electrode is very important for ion and electron transmission paths within the entire electrode. By optimizing the structure of the electrode, the conductivity of the electrode and the wettability thereof to the electrolyte solution can be improved, and the transmission rate of electrons and ions within the entire electrode can be increased, thereby improving the energy density, rate performance, and the like of the battery. However, it is a great challenge to obtain thick electrodes with both a good electron/ion transmission characteristic and a high loading capacity of an active substance.

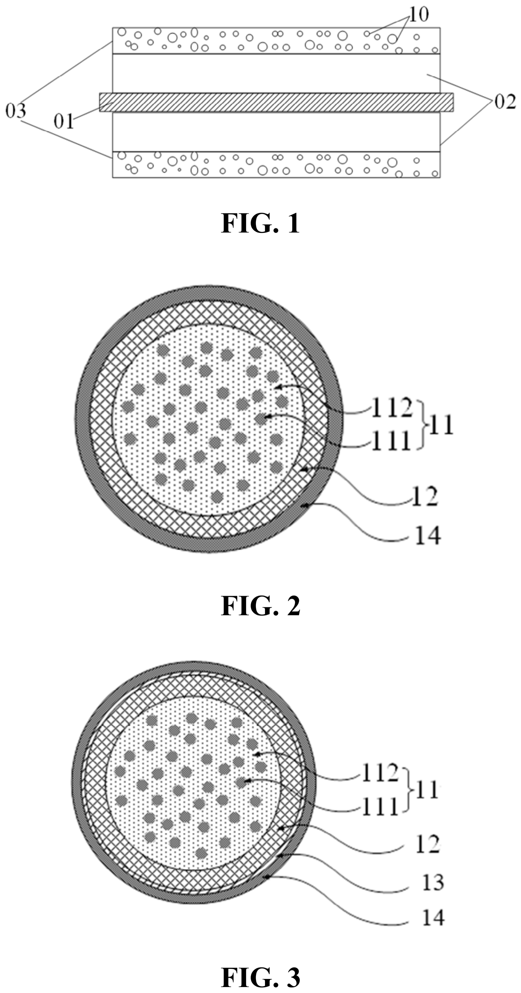

For example, even for thick electrode plates with multiple coating layers, there is still the problem of surface pores at a depth of about 10 µm to 20 µm on the surface of the electrode plate being crushed during the rolling process, which makes it impossible for lithium ions in the electrolyte solution to effectively diffuse into the interior of the electrode plate, resulting in a significant reduction in the charging capability. In order to solve this problem, there is a technology that increases the surface layer porosity by adding pore-forming agents in the surface-layer film layer of the negative electrode plate, such as using porous carbon. However, the use of the porous carbon leads to a loss in the energy density of the electrode plate, consequently reducing the gram capacity of the battery. In order to solve the above problem, a typical embodiment of the present application provides a negative electrode plate. As shown in FIG. 1, the negative electrode plate includes a current collector 01 and a negative electrode film layer. The negative electrode film layer includes a first film layer 02 and a second film layer 033. The first film layer 02 is provided on one side or both sides of the current collector 01. The second film layer 03 is provided on one side of the first film layer 02 away from the current collector 01. A negative electrode active material of the first film layer 02 and a negative electrode active material in the second film layer 03 each independently include a silicon-based negative electrode material, the silicon-based negative electrode material in the second film layer 03 includes a porous silicon negative electrode material 10, and a content of the silicon-based negative electrode material in the first film layer 02 is less than a content of the silicon-based negative electrode material in the second film layer 03.

In the negative electrode plate of the present application, the lower-layer first film layer 02 also includes the silicon-based negative electrode material, thereby improving the energy density of the negative electrode plate. At the same time, the content of a silicon-based negative electrode in the first film layer 02 on a lower layer is relatively small, which effectively alleviates the problem of stripping from the current collector 01 caused by pulverization of the silicon-based negative electrode material during the cycling process. The second film layer 03 on a surface layer has the porous silicon negative electrode material 10, thereby effectively avoiding the problem of a reduced gram capacity of a battery caused by the use of pore-forming agents such as porous carbon. In addition, the porous silicon negative electrode material 10 can increase surface layer pores, thereby alleviating the defect that due to damage to the surface layer pores caused by rolling, lithium ions cannot be intercalated into a negative electrode of the electrode plate. Moreover, the content of the silicon-based negative electrode material in the second film layer 03 on an upper layer is greater than the content of the silicon-based negative electrode material in the first film layer 02 on the lower layer, especially the upper layer has the porous silicon negative electrode material 10, such that lithium is preferentially intercalated in the upper layer, a lithium intercalating path is shorter, the kinetic performance is better, then the charging capability of the negative electrode plate is improved, and lithium precipitation is effectively alleviated, thereby improving the cycling performance of the battery.

The above first film layer 02 can be directly provided on the current collector 01 in a manner of contact, or a primer layer can be provided between the first film layer 02 and the current collector 01; and the above second film layer 03 can be directly provided on the first film layer 02 in a manner of contact, or other negative electrode film layers can be provided between the two, as long as the second film layer 03 is located on the surface layer of the negative electrode plate.

The content of the above silicon-based negative electrode material to be measured can be measured by referring to the following method. Step I: A plurality of negative electrode plate samples with different mass ratios, which are obtained by mixing the silicon-based negative electrode material and a graphite material are manufactured in advance (if it is measured that other negative electrode materials are further provided in the negative electrode plate, the negative electrode plate sample can be prepared by referring to the measured substance type of the negative electrode plate). Step II: The samples are taken respectively, and placed in a scanning electron microscope (SEM) for an energy spectrum test, such that a relative percentage mass content of a silicon element in each negative electrode plate sample can be obtained. Step III: The relative percentage mass content of the silicon element in each negative electrode plate sample is used as a horizontal axis, and a percentage mass content of the silicon-based negative electrode material in each negative electrode plate sample is used as a vertical axis to draw a standard curve and perform fitting to obtain a quantitative relational expression. Step IV: For the negative electrode plate to be tested, thicknesses of the upper and lower film layers are determined by using a cross-sectional polishing (CP) cross section, powder of the upper-layer second film layer is scraped out first and then powder of the lower-layer first film layer is scraped out by a powder scraping method to measure the relative percentage mass content of the silicon element in each film layer, and then percentage mass contents of the silicon-based negative electrode material in the first film layer and the second film layer to be tested are obtained through calculation according to the quantitative relational expression.

In some embodiments, a surface density M1 of the above first film layer 02 is in a range of 4.5 mg/cm² to 20 mg/cm²; and a surface density M2 of the above second film layer 03 is in a range of 0.2 mg/cm² to 20 mg/cm². The above weight ranges ensure an effective thickness of the two film layers. In some embodiments, the surface density M1 of the above first film layer 02 may be 4.5 mg/cm², 5 mg/cm²², 7 mg/cm², 10 mg/cm², 15 mg/cm², and 20 mg/cm², and preferably is 5 mg/cm² to 7 mg/cm². In some embodiments, a surface density M2 of the above second film layer 03 may be 0.2 mg/cm², 0.3 mg/cm², 0.4 mg/cm², 1 mg/cm², 2 mg/cm², 3 mg/cm², 5 mg/cm², 10 mg/cm², 17 mg/cm², and 20 mg/cm², and preferably is 0.3 mg/cm² to 17 mg/cm².

The main function of the second film layer 03 of the present application is to utilize the porous silicon negative electrode material 10 therein to increase surface porosity. In some embodiments, a weight ratio of the above first film layer 02 to the second film layer 03 is 95:5 to 30:70, and further optionally is 90:10 to 40:60, such as 90:10, 80:20, 70:30, 60:40, 50:50, or 40:60. In the above embodiments, especially when the first film layer 02 is used as a main body of the negative electrode film layer, the main function of the negative electrode plate is played, and the second film layer 03 is used to compensate for the defects of the first film layer 02, thereby improving the synergistic effect of the two film layers.

In some embodiments, a porosity of the above first film layer 02 is in a range of 20% to 50%, a porosity of the second film layer 03 is 20% to 70%, and a porosity of the negative electrode film layer is 20% to 70%, for example, 20%, 30%, 40%, 50%, 60%, or 70%. The negative electrode film layer with the above porosity can not only utilize the porosity to improve the lithium ion intercalating ability, but also utilize a negative electrode active material to increase the gram capacity of the negative electrode plate.

In some embodiments of the first aspect, a thickness of the above second film layer 03 is 10 µm to 20 µm, such as 10 µm, 12 µm, 15 µm, 18 µm, or 20 µm, and the thickness fully solves the problem that due to rolling, the pores on a surface of the negative electrode plate are crushed.

A method for measuring the weight of the above two film layers can refer to the following process. The thicknesses of the upper and lower film layers are determined through the CP cross section, by the powder scraping method, the powder of the upper-layer second film layer is scraped out first and weighed, and then the powder of the lower-layer first film layer is scraped out, and weighed, such that respective weights and ratios of the first film layer and the second film layer can be obtained.

A method for measuring the above porosity can refer to the following process. The CP cross section is imaged and scanned through imaging software, the porosity of corresponding cross sections and the first film layer 02 and the second film layer 03 are obtained through calculation, then multiple CP cross sections are scanned and imaged, and the respective porosity of the first film layer 02 and the second film layer 03 in the electrode plate is obtained through calculation with software.

In order to increase the energy density of the negative electrode plate as much as possible, in some embodiments, a mass content of the silicon-based negative electrode material in the above first film layer 02 is 0.5% to 50%, and optionally is 1% to 45%, 1% to 15%, 2% to 10%, or 5% to 10%, such as 1%, 2%, 5%, 10%, 15%, 20%, 25%, 30%, 35%, 40%, 45%, or 50%; and/or a mass content of the porous silicon negative electrode material 10 in the second film layer 03 is 0.5% to 70%, and optionally is 5% to 65%, 10% to 60%, 15% to 55%, or 20% to 50%, such as 5%, 10%, 15%, 20%, 25%, 30%, 35%, 40%, 45%, 50%, 55%, 60%, 65%, or 70%; and optionally, a mass content of the porous silicon negative electrode material 10 in the negative electrode film layer is 1% to 60%, and optionally is 5% to 55%, 5% to 25%, 5% to 20%, or 10% to 20%, such as, 1%, 5%, 10%, 15%, 20%, 25%, 30%, 35%, 40%, 45%, 50%, 55%, or 60%. Thus, the silicon-based negative electrode material in the two film layers can be utilized to increase the gram capacity of the negative electrode plate as much as possible.

In some embodiments, except the silicon-based negative electrode material, a negative electrode active material well known in the art and used for batteries can also be used as the negative electrode active material. As an example, the negative electrode active material can include at least one of the following materials: artificial graphite, natural graphite, soft carbon, hard carbon, a tin-based material, lithium titanate, etc. The tin-based material may be selected from at least one of elemental tin, a tin-oxygen compound, and a tin alloy. However, the present application is not limited to these materials, and other conventional materials useful as negative electrode active materials for batteries can also be used. One of these negative electrode active materials may be used alone, or two or more of these positive active materials may be used in combination.

The first film layer and the second film layer of the present application also contain, in addition to the negative electrode active material, a binder, a dispersant, and a conductive agent contained in a conventional negative electrode film layer. In some embodiments, the above second film layer includes the porous silicon negative electrode material, a graphite negative electrode material, a binder, a dispersant, and a conductive agent, and the conductive agent includes one or more of conductive carbon and carbon nanotubes; optionally, a percentage mass content of the porous silicon negative electrode material in the second film layer is 0.5% to 70%; optionally, a percentage mass content of the graphite negative electrode material in the second film layer is 25% to 90%; optionally, a percentage mass content of the binder in the second film layer is 1% to 8%; optionally, a percentage mass content of the dispersant in the second film layer is 0.5% to 2%; optionally, a percentage mass content of the conductive carbon in the second film layer is 0.5% to 5%; and optionally, a percentage mass content of the carbon nanotubes in the second film layer is 0.05% to 2%. The porous silicon negative electrode material and the graphite negative electrode material are combined, the structural stability of the graphite negative electrode material is used to improve the volumetric stability of the second film layer during the cycling process, and the porous silicon negative electrode material is used to improve the gram capacity and lithium ion transmission capacity of the second film layer.

In some embodiments, as an example, the binder includes at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, as an example, the conductive agent includes at least one of superconducting carbon, acetylene black, carbon black, Ketjen black, carbon dots, carbon nanotubes, graphene, and carbon nanofibers.

In some embodiments, as an example, the dispersant includes at least one of sodium carboxymethylcellulose (CMC), polyvinylpyrrolidone (PVP), and PAM.

In some embodiments, the above first film layer includes the silicon-based negative electrode material, a graphite negative electrode material, a binder, a dispersant, and a conductive agent, and the conductive agent includes one or more of conductive carbon and carbon nanotubes; optionally, a percentage mass content of the silicon-based negative electrode material in the first film layer is 0.5% to 50%; optionally, a percentage mass content of the graphite negative electrode material in the first film layer is 45% to 97.5%; optionally, a percentage mass content of the binder in the first film layer is 1% to 3%; optionally, a percentage mass content of the dispersant in the first film layer is 0.3% to 1.5%; optionally, a percentage mass content of the conductive carbon in the first film layer is 0 to 3%; and optionally, a percentage mass content of the carbon nanotubes in the first film layer is 0 to 0.5%. The content of the graphite negative electrode material in the first film layer is higher than the content of the graphite negative electrode material in the second film layer, thereby improving the structural stability of the first film layer and the adhesion stability of the current collector; and adding the silicon-based negative electrode material can increase the gram capacity of the first film layer to a certain extent.

In addition, the carbon nanotubes in the conductive agent in the first film layer and the second film layer have better conductivity, and a linear structure of the carbon nanotubes can restrain the silicon-based negative electrode material to a certain extent, which effectively alleviates the volume expansion of the silicon-based negative electrode material, and reduces pulverization thereof, thereby improving the cycling performance of the battery.

In some any embodiments, the silicon-based negative electrode material of the above first film layer includes any one or more of the group consisting of a silicon material, a silicon-oxide material, and the porous silicon negative electrode material, or the silicon-based negative electrode material of the first film layer is the porous silicon negative electrode material, as long as a content of the porous silicon negative electrode material in the first film layer is less than a content of the porous silicon negative electrode material in the second film layer, so as to improve the uniformity of the overall pores of the negative electrode film layer.

In some embodiments, Dv₅₀ of the above porous silicon negative electrode material is between µm and 20 µm, such as 3 µm, 4 µm, 5 µm, 7 µm, 10 µm, 12 µm, 15 µm, or 20 µm, and optionally is between 4 µm and 15 µm; and/or a BET specific surface area of the porous silicon negative electrode material is between 1 and 30 m²/g, and optionally is between 6 m²/g and 20 m²/g, so as to further improve the cycling performance and charging capability of the negative electrode plate.

The above Dv50 may be measured by using a laser particle size analyzer (such as Malvern Master Size 3000) with reference to the standard GB/T 19077.1-2016. The Dv50 refers to a corresponding particle size when the cumulative volume distribution percentage of the measured material reaches 50%.

The BET specific surface area refers to a specific surface area of the material measured using a low temperature nitrogen adsorption-desorption method.

Material porosity: The porosity of the silicon-based negative electrode materials may be tested by a true density porosity tester (such as AccuPyc II1340).

Porous silicon negative electrode materials commonly used in the art, such as a simple porous silicon material or a porous silicon material with a cladding, may be used as the porous silicon negative electrode material of the present application. In some embodiments, as shown in any of FIG. 2 to FIG. 4, the above porous silicon negative electrode material includes a core 11 and a cladding layer. The core 11 is porous silicon, the porous silicon includes elemental silicon 111 and a compound of silicon, and the compound of silicon includes an oxide of silicon 112. The cladding layer is cladded on a surface of the core. The porous silicon negative electrode material with a core-shell structure is adopted and can improve the charging capability of the negative electrode plate while alleviating the volume expansion of the silicon-based negative electrode material, thereby improving the cycling stability of a battery with high energy density. Those skilled in the art can obtain the composition of the porous silicon in the core of the porous silicon material by excluding substances of the outer cladding layer through the nuclear magnetic resonance (NMR) technology (such as equipment BRUKER AVANCE III HD 500MHz).

The "elemental silicon" has a high theoretical lithium intercalating capacity (about 4200 mAh/g) and a low lithium intercalating potential, thereby having great application potential in the field of batteries. However, the volume expansion effect of the elemental silicon is large, resulting in poor cycling stability of the battery. The "oxide of silicon" refers to a binary compound composed of element silicon and element oxygen. The volume expansion effect of the oxide of silicon is smaller than that of the elemental silicon. Compared with the elemental silicon, the oxide of silicon can alleviate the volume expansion effect and improve the cycling stability of the battery.

In some embodiments, the above cladding layer includes any one or more of a metal compound of silicon, lithium silicate, amorphous carbon, and carbon nanotubes. By cladding one or more of the above materials, the mechanical structure stability or conductivity of the porous silicon negative electrode material can be improved. Each of the above materials may be cladded in many ways. If feasible, single layer cladding can be implemented, or the materials can be cladded in multiple layers.

The "lithium silicate" refers to a series of compounds produced by a reaction of metallic lithium and silicic acid; and the "amorphous carbon" refers to carbon in a transition state, which is an allotrope of carbon, and usually refers to carbon elements other than graphite and diamond.

As shown in FIG. 2, in some embodiments, the above cladding layer includes a first cladding layer 12 and a third cladding layer 14. The first cladding layer 12 is cladded on the surface of the core 11, and the first cladding layer 12 includes lithium silicate. The third cladding layer 14 is cladded on a surface of the first cladding layer 12, the third cladding layer 14 includes amorphous carbon, and optionally, a material of the amorphous carbon includes hard carbon and/or soft carbon. The first cladding layer includes lithium silicate which can generate a lithium salt and an inert phase (lithium oxide) during the lithium intercalating process. The generation of the lithium salt can reduce the consumption of lithium ions in the positive electrode active material during the initial lithium intercalating process, such that the battery has higher initial coulombic efficiency and charging capability. The generation of the inert phase can effectively alleviate volume expansion, thereby improving the cycling performance of the battery. On the one hand, the third cladding layer can buffer the volume expansion of the first cladding layer, thereby improving the cycling performance. On the other hand, the third cladding layer can improve protection for the first cladding layer, avoid direct contact between the first cladding layer and water, and prevent dissolution and gas generation of lithium silicate in the first cladding layer.

The porous silicon negative electrode material as shown in FIG. 2 can be prepared by the following method:
1. Silicon grains and silicon dioxide are prepared and synthesized by vapor deposition to obtain silicon monoxide. Dᵥ50 of the silicon monoxide is adjusted by adjusting the temperature of vapor deposition to be between 600°C and 1200°C. Silicon monoxide particles are dispersed into water, then polyvinylpyrrolidone (with a molar ratio to the silicon dioxide of 5 to 15:1) is added, heating to boiling is performed, reflux is performed for 2 h to 5 h, then an inorganic alkali solution (with a concentration of 0.01 mmol/L to 0.1 mmol/L, such as a sodium hydroxide solution) is added after cooling to room temperature, and then stirring and etching are performed for several hours. The obtained suspension is centrifuged and then washed with water 2-3 times, dried at 100°C to 110°C for 1 h to 3 h, and then calcined in a muffle furnace at 500°C to 600°C for 3 h to 5 h to obtain porous silicon monoxide as a core structure. The Dᵥ50 distribution of the porous silicon monoxide is adjusted by grinding the porous silicon monoxide, for example, the grinding time is adjusted to be between 0.5 h and 24 h to change the Dᵥ50, and the Dᵥ50 can be further adjusted by sieving;
2. Amorphous carbon: After mixing an amorphous carbon source such as asphalt with the above core structure, high temperature treatment is performed for 1 h to 10 h (for example, the amorphous carbon source and the core structure are mixed in a mass ratio of 0.01:1 to 0.1:1), and the temperature is controlled at 700°C to 1500°C, such that a cladding layer containing the amorphous carbon can be obtained;
3. The material obtained in the above step 2 is mixed with a lithium source (for example, the material obtained in step 2 and the lithium source are mixed in a mass ratio of 1:0.09 to 1:0.2), such as lithium powder, lithium hydride, lithium oxide, lithium carbonate, or organic lithium, and high temperature treatment at 300°C to 1000°C is performed for 1 h to 5 h. Lithium ions may pass through the amorphous carbon cladding layer, such that the first cladding layer, containing lithium silicate, cladded on the core structure is formed inside the amorphous carbon; and
4. Finally, the material obtained in step 3 is mixed with a solution of carbon nanotubes, where a mass ratio of the material obtained in step 3 to the carbon nanotubes is 1:0.02 to 1:0.1, and a bonding reaction occurs during high temperature treatment of 100°C to 400°C to clad the carbon nanotubes on a surface of the material, such that the third cladding layer in which the amorphous carbon material and the carbon nanotubes are mixed is formed.

As shown in FIG. 3, in some embodiments, the above cladding layer includes a first cladding layer 12, a second cladding layer 13, and a third cladding layer 14, where the first cladding layer 12 is cladded on the surface of the core 11, and the first cladding layer 12 includes lithium silicate; the second cladding layer 13 is cladded on a surface of the first cladding layer 12, the second cladding layer 13 includes a metal compound of silicon, and optionally metal elements of the metal compound of silicon include Ti, Mg, and/or Al; and the third cladding layer 14 is cladded on a surface of the second cladding layer 13, the third cladding layer 14 includes amorphous carbon, and optionally, a material of the amorphous carbon includes hard carbon and/or soft carbon. Further, the second cladding layer provided between the first cladding layer and the third cladding layer includes the metal compound of silicon, which has strong mechanical strength, and thus can buffer the volume expansion of the internal silicon material, thereby improving the cycling performance.

The porous silicon negative electrode material as shown in FIG. 3 can be prepared by the following method:
1. Silicon grains and silicon dioxide are prepared and synthesized by vapor deposition to obtain silicon monoxide. Silicon monoxide particles are dispersed into water, then polyvinylpyrrolidone (with a molar ratio to the silicon dioxide of 5 to 15:1) is added, heating to boiling is performed, reflux is performed for 2 h to 5 h, then an inorganic alkali solution (with a concentration of 0.01 mmol/L to 0.1 mmol/L, such as a sodium hydroxide solution) is added after cooling to room temperature, and then stirring and etching are performed for several hours. The obtained suspension is centrifuged and then washed with water 2-3 times, dried at 100°C to 110°C for 1 h to 3 h, and then calcined in a muffle furnace at 500°C to 600°C for 3 h to 5 h to obtain porous silicon monoxide as a core structure;
2. Amorphous carbon: After mixing an amorphous carbon source such as asphalt with the above core structure, high temperature treatment is performed for 1 h to 10 h, and the temperature is controlled at 700°C to 1500°C, such that a cladding layer containing the amorphous carbon can be obtained;
3. The material obtained in the above step 2 is mixed with a lithium source such as lithium powder, lithium hydride, lithium oxide, lithium carbonate, or organic lithium, and high temperature treatment at 300°C to 1000°C is performed for 1 h to 5 h. Lithium ions may pass through the amorphous carbon cladding layer, such that the first cladding layer, containing lithium silicate, cladded on the core structure is formed inside the amorphous carbon;
4. Preparation of a metal compound cladding layer of silicon: A metal cladding raw material is mixed with the material obtained in step 3 in a mass ratio of 0.001:1 to 0.02:1, the mixed material is subjected to high temperature treatment at 600°C to 1000°C for 0.5 h to 2 h, the treated material is subjected to ball milling stirring for 10 min to 60 min, metal ions may pass through the amorphous carbon cladding layer, such that the second cladding layer of the metal compound containing silicon is formed inside the amorphous carbon and on a surface of lithium silicate; and
5. Finally, the material obtained in step 4 is mixed with a solution of carbon nanotubes, and a bonding reaction occurs under high temperature treatment of 100°C to 400°C to clad the carbon nanotubes on a surface of the material, such that the third cladding layer in which the amorphous carbon material and the carbon nanotubes are mixed is formed.

The above metal cladding raw material includes, but is not limited to, a metal salt and a metal oxide.

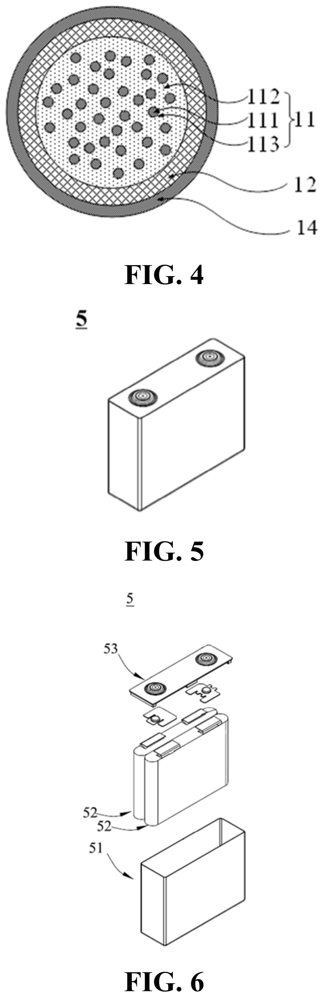

As shown in FIG. 4, in some embodiments, based on the structure shown in FIG. 2, the above compound of silicon further includes a metal compound of silicon 113, and the metal compound of silicon 113 is cladded on the surface of the elemental silicon. The "metal compound of silicon" refers to a compound generated by a transition metal and silicon; and optionally, metal elements of the metal compound of silicon include Ti, Mg, and/or Al. Cladding the metal compound of silicon on the surface of the elemental silicon can buffer the volume expansion of the elemental silicon, thereby improving the cycling performance and charging capability.

The porous silicon negative electrode material as shown in FIG. 4 can be prepared by the following method:
1. Silicon grains and silicon dioxide are prepared and synthesized by vapor deposition to obtain silicon monoxide. Silicon monoxide particles are dispersed into water, then polyvinylpyrrolidone (with a molar ratio to the silicon dioxide of 5 to 15:1) is added, heating to boiling is performed, reflux is performed for 2 h to 5 h, then an inorganic alkali solution (with a concentration of 0.01 mmol/L to 0.1 mmol/L, such as a sodium hydroxide solution) is added after cooling to room temperature, and then stirring and etching are performed for several hours. The obtained suspension is centrifuged and then washed with water 2-3 times, dried at 100°C to 110°C for 1 h to 3 h, and then calcined in a muffle furnace at 500°C to 600°C for 3 h to 5 h to obtain porous silicon monoxide;
2. Preparation of a metal compound cladding layer of silicon: A metal cladding raw material is mixed with the porous silicon monoxide, the mixed material is subjected to high temperature treatment at 800°C to 1300°C for 1 h to 6 h, and the high temperature treated material is ground. The cladding directly reacts with the silicon grains through a phase selective reaction, and the metal compound cladding layer of silicon is formed on the surface of the elemental silicon as a core structure;
3. Amorphous carbon: After mixing an amorphous carbon source such as asphalt with the above core structure, high temperature treatment is performed for 1 h to 10 h, and the temperature is controlled at 700°C to 1500°C, such that a cladding layer containing the amorphous carbon can be obtained;
4. The material obtained in the above step 3 is mixed with a lithium source such as lithium powder, lithium hydride, lithium oxide, lithium carbonate, or organic lithium, and high temperature treatment at 300°C to 1000°C is performed for 1 h to 5 h. Lithium ions may pass through the amorphous carbon cladding layer, such that the first cladding layer, containing lithium silicate, cladded on the core structure is formed inside the amorphous carbon; and
5. Finally, the material obtained in step 4 is mixed with a solution of carbon nanotubes, and a bonding reaction occurs under high temperature treatment of 100°C to 400°C to clad the carbon nanotubes on a surface of the material, such that the third cladding layer in which the amorphous carbon material and the carbon nanotubes are mixed is formed.

The above hard carbon refers to carbon that is difficult to graphitize and is a thermal decomposition product of a high-molecular polymer. Common hard carbon includes resin carbon, organic polymer pyrolytic carbon, carbon black, and the like. Soft carbon generally refers to black carbon, which is a type of highly aromatic substance produced by pyrolysis and carbonization of fossil fuels and biomass under oxygen-deficient conditions. In the above embodiments of the present application, amorphous carbon may be only hard carbon, or only soft carbon, or a mixture of hard carbon and soft carbon. Because amorphous carbon has large interlayer spacing and a high lithium intercalating rate, it is beneficial to improving the overall performance of the battery.

In some embodiments, the above third cladding layer further includes carbon nanotubes. The carbon nanotubes can improve the conductivity of the porous silicon negative electrode material, and the carbon nanotubes are utilized to fully restrain the porous silicon negative electrode material, thereby alleviating volume expansion during the charging and discharging process, controlling polarization inside a battery cell of the negative electrode plate, and improving the cycling performance of the battery cell. Definition: Mass of the porous silicon negative electrode material 10 in the above first film layer 02 and the second film layer 03 is m1 and m2, respectively; percentage mass contents of carbon nanotubes of the porous silicon negative electrode material 10 in the first film layer 02 and the second film layer 03 are C1 and C2, respectively; and excluding the carbon nanotubes in the porous silicon negative electrode material 10, mass of remaining carbon nanotubes in the first film layer 02 and the second film layer 03 is S1 and S2, respectively, and the above first film layer 02 and the second film layer 03 are a first film layer 02 per unit area and a second film layer 03 per unit area, respectively. In order to ensure sufficient restraining of the porous silicon negative electrode material 10 and effectively suppress the rebound of the negative electrode plate, in some embodiments, the carbon nanotubes in the third cladding layer, the carbon nanotubes in the first film layer 02, and the carbon nanotubes in the second film layer 03 are designed in match to satisfy the following relationships:(m2×C2+S2)/M2=(m1×C1+S1)/M1, m2≥m1, S1≥S2, and S2=m1×m2×(C2-C1)/(m2-m1), which further improves the restraining capability for the silicon-based negative electrode, thereby effectively suppressing the rebound of the negative electrode plate, and minimizing the polarization of the negative electrode plate.

The mass of the porous silicon negative electrode material in the above first film layer and the second film layer is m1 and m2, respectively, and measured by referring to the foregoing method for measuring the content of the silicon-based negative electrode material.

Measurement of the percentage mass contents C1 and C2 of the carbon nanotubes on the surface of the above porous silicon negative electrode material: An SEM can be used to count the number and length of the carbon nanotubes on a surface of multiple silicon particles, and the mass of the carbon tube corresponding to single carbon nanotube is obtained by simulating the chain length and molecular number of the carbon tubes. An average value is obtained by calculating the number of the multiple carbon tubes as the mass of the carbon nanotubes on the surface of the porous silicon negative electrode material, and then the percentage mass contents C1 and C2 of the carbon nanotubes in the porous silicon negative electrode material are obtained through calculation according to the volume and true density of the porous silicon negative electrode material.

The mass of the remaining carbon nanotubes in the first film layer and the second film layer is S1 and S2, respectively. The thicknesses of the upper and lower film layers are determined by the CP cross section, by the powder scraping method, the powder of the upper-layer second film layer is scraped out, and then the powder of the lower-layer first film layer is scraped out, then each powder is divided into n parts of equal mass to ensure uniform distribution on an SEM sample stage, then the number of the carbon nanotubes is counted through SEM testing, and the mass of the carbon nanotubes in the first film layer and the second film layer is calculated using the calculation method in the above method.

In some embodiments, Dv50 of the above elemental silicon is in a range of 0<Dv50≤10 nm; and optionally, the Dv50 of the elemental silicon is in a range of 2 nm<Dv50≤8 nm. The use of the nano-scale elemental silicon is conducive to mixing of the oxide of silicon with the same, which thus is beneficial to improving the charging capability of the battery, and reducing the difficulty of cladding the core structure, thereby improving the cycling stability of the battery.

A chemical formula of the "oxide of silicon" is SiOx, and in the formula, 0<x≤2, such as silicon monoxide (SiO) and silicon dioxide (SiO₂). In some embodiments, Dv50 of the oxide of silicon in use is in a range of 2 µm≤Dv50≤13 µm. Therefore, it facilitates mixing with the elemental silicon and improving the energy density of the battery.

In some embodiments, the above lithium silicate includes one or more of Li₂SiO₃, Li₂Si₂O₅, Li₄SiO₄, Li₂Si₃O₇, Li₈SiO₆, Li₆Si₂O₇, Li₄Si₂O₇, Li₂Si₄O₇, and LiSiO₃; optionally, the lithium silicate includes at least Li₂SiO₃, such that the first cladding layer effectively reduces the consumption of lithium ions in a positive electrode active material during the initial lithium intercalating process, thereby making the battery have higher initial coulombic efficiency. Further optionally, mass of the Li₂SiO₃ is at least 50% of the mass of the first cladding layer, such as 50%, 55%, 60%, 65%, 70%, 75%, 80%, 85%, or 90%, and more optionally, the mass of the Li₂SiO₃ is at least 70% of the mass of the first cladding layer, thereby ensuring higher lithium conductivity of the first cladding layer and improving the overall charging capability of the material.

Standard samples with different Li₂SiO₃ contents are prepared according to the type of lithium silicate in the first cladding layer, test contents of different Li₂SiO₃ contents are obtained by time of flight-secondary ion mass spectrometry (TOF-SIMES) testing, and a standard curve of the test content and the actual content is established. The first cladding layer is tested by TOF-SIMES to obtain the test content of the Li₂SiO₃, and the accurate content of the Li₂SiO₃ is obtained by calibration with the standard curve.

In any embodiment of the first aspect, a thickness of the above first cladding layer is 10% to 80% of a particle radius of the porous silicon negative electrode material. Optionally, a thickness of the second cladding layer is 1 nm to 50 nm. Optionally, a thickness of the third cladding layer is 1 nm to 1000 nm, and optionally, is 5 nm to 300 nm. Within the above thickness ranges, particles can effectively alleviate the volume expansion of a negative electrode material while increasing the energy density of the battery, thereby improving the cycling stability and charging capability of the battery with high energy density. The above thickness is tested from the outside to the inside of particles by TOF-SIMES, and the thickness of each cladding layer is determined by substances at different depths. When preparing the porous silicon negative electrode material, the amount of the raw material corresponding to each cladding layer is adjusted to antagonize adjustment of the thickness thereof.

In some embodiments, a negative electrode current collector may be a metal foil or a composite current collector. For example, a copper foil may be used as the metal foil. The composite current collector can comprise a polymer material substrate layer and a metal layer formed on at least one surface of the polymer material substrate. The composite current collector may be formed by forming a metal material (copper, copper alloys, nickel, nickel alloys, titanium, titanium alloys, silver and silver alloys, etc.) on a high polymer material substrate (such as substrate of polypropylene (PP), polyethylene terephthalate (PET), polybutylene terephthalate (PBT), polystyrene (PS), polyethylene (PE), etc.).

In some embodiments, the negative electrode plate may be prepared by the following method: the above components, such as the negative electrode active material, the conductive agent, the binder, and any other component, for preparing the negative electrode plate are dispersed in a solvent (such as deionized water) to form a negative electrode slurry; and the negative electrode slurry is coated on the negative electrode current collector, followed by drying and cold pressing processes to obtain the negative electrode plate.

### [Positive electrode plate]

The positive electrode plate usually includes a positive electrode current collector and a positive electrode film layer provided on at least one surface of the positive electrode current collector, and the positive electrode film layer includes a positive electrode active material.

As an example, the positive electrode current collector has two opposite surfaces in a thickness direction thereof, and the positive electrode film layer is provided on either or both of the opposite surfaces of the positive electrode current collector.

In some embodiments, the positive electrode current collector may be a metal foil or a composite current collector. For example, an aluminum foil may be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may comprise at least one of the following materials: a lithium-comprising phosphate of olivine structure, a lithium transition metal oxide, and a respective modified compound thereof. However, the present application is not limited to these materials, and other conventional materials that can be used as positive electrode active materials for batteries may also be used. Only a single one of or a combination of two or more of these positive electrode active materials can be used. Examples of lithium transition metal oxides may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), a lithium-nickel-cobalt-aluminum oxide (such as LiNi_{0.85}Co_{0.15}Al_{0.05}O₂), and a modified compound thereof. Examples of lithium-containing phosphates of olivine structure may comprise, but are not limited to, at least one of lithium iron phosphate (e.g., LiFePO₄ (also abbreviated as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared by the following method: the above components, such as the positive electrode active material, the conductive agent, the binder, and any other component, for preparing the positive electrode plate are dispersed in a solvent (such as N-methyl pyrrolidone) to form a positive electrode slurry; and the positive electrode slurry is coated on the positive electrode current collector, followed by drying and cold pressing processes to obtain the positive electrode plate.

### [Electrolyte]

The electrolyte plays a role in conducting ions between the positive electrode plate and negative electrode plate. The type of the electrolyte is not specifically limited in the present application and can be selected according to requirements. For example, the electrolyte may be in a liquid state, a gel state, or an all-solid state.

In some embodiments, the electrolyte is in a liquid state and further includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methylsulfonylmethane, ethyl methyl sulfone, and ethylsulfonylethane.

In some embodiments, the electrolyte solution further optionally comprises an additive. As an example, the additive may include a negative electrode film-forming additive and a positive electrode film-forming additive and may further include additives that can improve some properties of the battery, for example, an additive that improves the overcharging performance of the battery and an additive that improves the high-temperature or low-temperature performance of the battery.

### [Separator]

In some embodiments, the secondary battery further comprises a separator. The type of the separator is not particularly limited in the present application, and any well-known separator with a porous structure having good chemical stability and mechanical stability can be selected.

In some embodiments, the material of the separator can be selected from at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.

In some embodiments, the positive electrode plate, the negative electrode plate, and the separator can be made into an electrode assembly by a winding process or a lamination process.

In some embodiments, the secondary battery can comprise an outer package. The outer packaging can be used for encapsulating the above electrode assembly and electrolyte.

In some embodiments, the outer package of the secondary battery can be a hard shell, such as a hard plastic shell, an aluminum shell, or a steel shell. The outer package of the secondary battery can also be a soft package, such as a pouch-type soft package. The material of the soft package can be plastic, and examples of the plastic can include polypropylene, polybutylene terephthalate, polybutylene succinate, etc.

The shape of the secondary battery is not particularly limited in the present application, and the secondary battery can be cylindrical, square, or in any other shape. For example, FIG. 5 shows a secondary battery 5 with a square structure as an example.

In some embodiments, referring to FIG. 6, an outer package may include a case 51 and a cover plate 53. Here, the case 51 may include a bottom plate and a side plate connected to the bottom plate, with the bottom plate and the side plate enclosing to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of the secondary batteries included in the battery module may be one or more, and the specific number may be selected by those skilled in the art according to the application and capacity of the battery module.

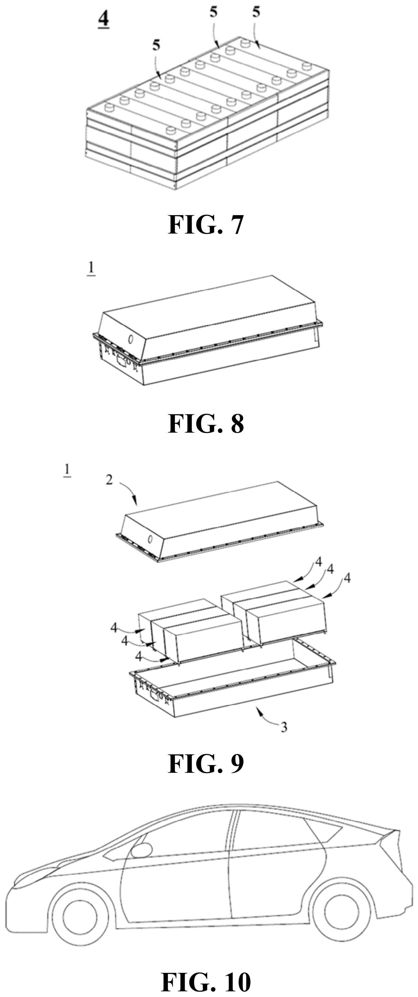

FIG. 7 shows a battery module 4 as an example. Referring to FIG. 7, in the battery module 4, a plurality of secondary batteries 5 may be sequentially provided in a length direction of the battery module 4. Of course, any other arrangements are also possible. The plurality of secondary batteries 5 may further be fixed by fasteners.

Optionally, the battery module 4 may further comprise a shell having an accommodating space, in which the plurality of secondary batteries 5 is accommodated.

In some embodiments, the above battery modules may also be assembled into a battery pack, the number of the battery modules included in the battery pack may be one or more, and the specific number may be selected by those skilled in the art according to the application and capacity of the battery pack.

FIG. 8 and FIG. 9 show a battery pack 1 as an example. Referring to FIG. 8 and FIG. 9, the battery pack 1 may include a battery box and a plurality of battery modules 4 provided in the battery box. The battery box includes an upper box 2 and a lower box 3. The upper box 2 can cover the lower box 3 to form an enclosed space for accommodating the battery module 4. The plurality of battery modules 4 may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may comprise, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack may be selected according to the use requirements thereof.

Fig. 10 is an electrical apparatus as an example. The electrical apparatus is an all-electric vehicle, a hybrid electric vehicle, a plug-in hybrid electric vehicle, etc. In order to meet the requirements of the electrical apparatus for high power and high energy density of a secondary battery, a battery pack or a battery module may be used.

### [Examples]

Examples of the present application will be described below. The Examples described below are illustrative and only used to explain the present application, and cannot be construed as limiting the present application. In Examples in which no specific technologies or conditions are specified, technologies or conditions described in the literature in the art or product specifications are followed. The reagents or instruments used without the manufacturer indicated are all commercially available conventional products.

**I. Porous silicon negative electrode material**

| **Material** | **Specific substance** | **Source** |
|---|---|---|
| **Graphite** | **Artificial graphite** | **BTR, BFC-H21** |
| **Binder** | **Styrene butadiene rubber** | **Japan A&L, SN-307** |
| **Dispersant** | **Sodium carboxymethylcellulose** | **Daicel, CMC2200** |
| **Conductive agent** | **SP** | **Japan Lion, ECP-600JD** |
| | **Carbon nanotubes** | **CNano Technology, FT6000** |

### Preparation process of a porous silicon negative electrode material 1

1. Silicon grains and silicon dioxide are prepared and synthesized by vapor deposition to obtain silicon monoxide, where the deposition temperature is controlled to be 800°C. Silicon monoxide particles are dispersed into water, then polyvinylpyrrolidone (with a molar ratio to the silicon dioxide of 10:1 ) is added, heating to boiling is performed, reflux is performed for 3 h, then a sodium hydroxide solution with a concentration of 0.05 mmol/L is added after cooling to room temperature, and then stirring and etching are performed for 4 h. The obtained suspension is centrifuged and then washed with water 2-3 times, dried at 105°C for 2 h, and then calcined in a muffle furnace at 550°C for 4 h to obtain porous silicon monoxide. The obtained porous silicon monoxide is ground and sieved to adjust Dᵥ50 thereof;
2. Preparation of a metal compound cladding layer of silicon: A metal cladding raw material TiO₂ is mixed with the silicon monoxide in a mass ratio of 0.003:1, the mixed material is subjected to high temperature treatment at 1000°C for 4 h, and the high temperature treated material is ground. The cladding directly reacts with the silicon grains through a phase selective reaction, and a TiSi cladding layer of silicon is formed on the surface of the elemental silicon as a core structure;
3. Amorphous carbon: Asphalt and the above core structure are mixed in a mass ratio of 0.05:1 and then subjected to high temperature treatment for 6 h, and the temperature is controlled at 1100°C, such that a cladding layer containing amorphous carbon is obtained;
4. The material obtained in the above step 3 is mixed with lithium carbonate in a mass ratio of 1:0.2, and high temperature treatment at 800°C is performed for 3 h. Lithium ions pass through the amorphous carbon cladding layer, such that the first cladding layer, containing lithium silicate, cladded on the core structure is formed inside the amorphous carbon; and
5. Finally, the material obtained in step 4 is mixed with a solution of carbon nanotubes, where a mass ratio of the material obtained in step 4 to the carbon nanotubes is 1:0.08, and a bonding reaction occurs at high temperature treatment of 250°C to clad the carbon nanotubes on a surface of the material, such that the third cladding layer in which the amorphous carbon material and the carbon nanotubes are mixed is formed.

Based on the preparation process of the above porous silicon negative electrode material 1, porous silicon negative electrode materials 2 to 5 are obtained by adjusting the grinding time and the sieve size.

Based on the preparation process of the above porous silicon negative electrode material 1, porous silicon negative electrode materials 6 to 10 are obtained by adjusting the temperature of vapor deposition.

Based on the preparation process of the above porous silicon negative electrode material 1, the mass contents of the porous silicon material and lithium carbonate are adjusted to obtain porous silicon negative electrode materials 11 to 14 with different thicknesses of the first cladding layer.

Based on the preparation process of the above porous silicon negative electrode material 1, the amount of the metal cladding raw material TiO₂ is halved to obtain a porous silicon negative electrode material 15.

### Preparation process of a porous silicon negative electrode material 16

The difference from the preparation process of the porous silicon negative electrode material 1 only lies in that MgCl₂ is used to replace TiO₂.

### Preparation process of a porous silicon negative electrode material 17

1. Silicon grains and silicon dioxide are prepared and synthesized by vapor deposition to obtain silicon monoxide, where the deposition temperature is controlled to be 800°C. Silicon monoxide particles are dispersed into water, then polyvinylpyrrolidone (with a molar ratio to the silicon dioxide of 10:1) is added, heating to boiling is performed, reflux is performed for 3 h, then a sodium hydroxide solution is added after cooling to room temperature, and then stirring and etching are performed for several hours. The obtained suspension is centrifuged and then washed with water 2-3 times, dried at 105°C for 2 h, and then calcined in a muffle furnace at 550°C for 4 to obtain porous silicon monoxide as a core structure. The obtained porous silicon monoxide is ground and sieved to adjust Dᵥ50 thereof;
2. Amorphous carbon: Asphalt and the above core structure are mixed in a mass ratio of 0.05:1 and then subjected to high temperature treatment for 6 h, and the temperature is controlled at 1000°C, such that a cladding layer containing amorphous carbon is obtained;
3. The material obtained in the above step 2 is mixed with lithium carbonate in a mass ratio of 1:1.2, and high temperature treatment at 800°C is performed for 3 h. Lithium ions may pass through the amorphous carbon cladding layer, such that the first cladding layer, containing lithium silicate, cladded on the core structure is formed inside the amorphous carbon;
4. Preparation of a metal compound cladding layer of silicon: A metal cladding raw material is mixed with the material obtained in step 3 in a mass ratio of 0.015:1, the mixed material is subjected to high temperature treatment at 1000°C for 1 h, the treated material is subjected to ball milling stirring for 30 min, and metal ions may pass through the amorphous carbon cladding layer, such that the second cladding layer of the metal compound containing silicon is formed inside the amorphous carbon and on a surface of lithium silicate; and
5. Finally, the material obtained in step 4 is mixed with a solution of carbon nanotubes, where a mass ratio of the material obtained in step 4 to the carbon nanotubes is 1:0.08, and a bonding reaction occurs at high temperature treatment of 250°C to clad the carbon nanotubes on a surface of the material, such that the third cladding layer in which the amorphous carbon material and the carbon nanotubes are mixed is formed.

Based on the preparation process of the above porous silicon negative electrode material 17, porous silicon negative electrode materials 18 to 21 are obtained by adjusting the amount of the metal cladding raw material.

Based on the preparation process of the above porous silicon negative electrode material 17, porous silicon negative electrode materials 22 and 23 are obtained by adjusting the amount of asphalt.

Based on the preparation process of the above porous silicon negative electrode material 17, a porous silicon negative electrode material 24 is obtained by adjusting the amount of carbon nanotubes.

### Preparation process of a porous silicon negative electrode material 25

The difference from the preparation process of the porous silicon negative electrode material 17 only lies in that MgCl₂ is used to replace TiO₂.

### Preparation process of a porous silicon negative electrode material 26

1. Silicon grains and silicon dioxide are prepared and synthesized by vapor deposition to obtain silicon monoxide, where the deposition temperature is controlled to be 800°C. Silicon monoxide particles are dispersed into water, then polyvinylpyrrolidone (with a molar ratio to the silicon dioxide of 10:1 ) is added, heating to boiling is performed, reflux is performed for 3 h, then a sodium hydroxide solution with a concentration of 0.05mmol/L is added after cooling to room temperature, and then stirring and etching are performed for several hours. The obtained suspension is centrifuged and then washed with water 2-3 times, dried at 105°C for 2 h, and then calcined in a muffle furnace at 550°C for 4 h to obtain porous silicon monoxide as a core structure;
2. Amorphous carbon: Asphalt and the above core structure are mixed in a mass ratio of 1.2:1 and then subjected to high temperature treatment for 6 h, and the temperature is controlled at 1100°C, such that a cladding layer containing amorphous carbon is obtained;
3. The material obtained in the above step 2 is mixed with lithium carbonate in a mass ratio of 1:1.2, and high temperature treatment at 800°C is performed for 3 h. Lithium ions may pass through the amorphous carbon cladding layer, such that the first cladding layer, containing lithium silicate, cladded on the core structure is formed inside the amorphous carbon; and
4. Finally, the material obtained in step 3 is mixed with a solution of the carbon nanotubes, where a mass ratio of the material obtained in step 3 to the carbon nanotubes is 1:0.08, and a bonding reaction occurs during high temperature treatment of 250°C to clad the carbon nanotubes on a surface of the material, such that the third cladding layer in which the amorphous carbon material and the carbon nanotubes are mixed is formed.

### Preparation process of a silicon negative electrode material 27

1. Silicon grains and silicon dioxide are prepared and synthesized by vapor deposition to obtain silicon monoxide as a core structure;
2. Amorphous carbon: Asphalt and the above core structure are mixed in a mass ratio of 1.2:1 and then subjected to high temperature treatment for 6 h, and the temperature is controlled at 1100°C, such that a cladding layer containing amorphous carbon is obtained;
3. The material obtained in the above step 2 is mixed with lithium carbonate in a mass ratio of 1:1.2, and high temperature treatment at 800°C is performed for 3 h. Lithium ions may pass through the amorphous carbon cladding layer, such that the first cladding layer, containing lithium silicate, cladded on the core structure is formed inside the amorphous carbon; and
4. Finally, the material obtained in step 3 is mixed with a solution of the carbon nanotubes, where a mass ratio of the material obtained in step 3 to the carbon nanotubes is 1:0.08, and a bonding reaction occurs at high temperature treatment of 250°C to clad the carbon nanotubes on a surface of the material, such that the third cladding layer in which the amorphous carbon material and the carbon nanotubes are mixed is formed.

### Test of the prepared porous silicon negative electrode material:

Dv50: measured by using a laser particle size analyzer (such as Malvern Master Size 3000) with reference to the standard GB/T 19077.1-2016. The Dv50 refers to a corresponding particle size when the cumulative volume distribution percentage of the measured material reaches 50%. When the core structure is formed, the above method is used to measure the Dv50 of the elemental silicon; and after all cladding layers are cladded, the above method is used to measure the Dv50 of the porous silicon negative electrode material.

BET specific surface area: The specific surface area of the porous silicon negative electrode materials is measured using a low-temperature nitrogen adsorption-desorption method.

Measurement of the mass content of the Li₂SiO₃: The corresponding content of the Li₂SiO₃ is obtained by TOF-SIMES testing, and the standard curve is tested by standard samples. By calibration with the standard curve, the accurate content of the Li₂SiO₃ is obtained.

Measurement of the thickness of each cladding layer: Testing is performed from the outside to the inside of particles by TOF-SIMES, and the thickness of each cladding layer is determined through substances at different depths.

Measurement of the content of the carbon nanotubes: An SEM can be used to count the number and length of the carbon nanotubes on the surface of the multiple silicon particles, and the mass of the carbon tubes corresponding to single carbon nanotube is obtained by simulating the chain length and molecular number of the carbon tubes. An average value is obtained by calculating the number of the multiple carbon tubes as the mass of the carbon nanotubes on the surface of the porous silicon negative electrode material. Then the percentage mass contents C1 and C2 of the carbon nanotubes in the porous silicon negative electrode material in two film layers of the following negative electrode plate are obtained by calculation according to the volume and true density of the porous silicon negative electrode material.

The test results are recorded in Table 1 and Table 2

**Table 1**

| Porous silicon Negative electrode material | Porous silicon negative electrode material | | Core | | | First cladding layer | | Third cladding layer | | |
|---|---|---|---|---|---|---|---|---|---|---|
| | D_{V}50 (µm) | BET (m²/g) | Elemental silicon Dv50 (nm) | Metal compound of silicon | Thickness of metal compound of silicon (nm) | Mass content of Li₂SiO₃ | Thickness (µm) | Amorphous carbon Content (%) | Carbon nanotubes Content (%) | Thickness (nm) |
| 1 | 7 | 12 | 4 nm | TiSi | 2 nm | 95% | 5.6 | 6% | 0.8 | 100 nm |
| 2 | 3 | 20 | 4 nm | TiSi | 2 nm | 98% | 2.4 | 6% | 0.8 | 100 nm |
| 3 | 15 | 8 | 4 nm | TiSi | 2 nm | 95% | 12 | 6% | 0.8 | 100 nm |
| 4 | 20 | 6 | 4 nm | TiSi | 2 nm | 93% | 16 | 6% | 0.8 | 100 nm |
| 5 | 25 | 4 | 4 nm | TiSi | 2 nm | 90% | 20 | 6% | 0.8 | 100 nm |
| 6 | 7 | 12 | 2 nm | TiSi | 2 nm | 95% | 5.6 | 6% | 0.8 | 100 nm |
| 7 | 7 | 12 | 1 nm | TiSi | 2 nm | 95% | 5.6 | 6% | 0.8 | 100 nm |
| 8 | 7 | 12 | 8 nm | TiSi | 2 nm | 95% | 5.6 | 6% | 0.8 | 100 nm |
| 9 | 7 | 12 | 10 nm | TiSi | 2 nm | 95% | 5.6 | 6% | 0.8 | 100 nm |
| 10 | 7 | 12 | 15 nm | TiSi | 2 nm | 95% | 5.6 | 6% | 0.8 | 100 nm |
| 11 | 7 | 12 | 4 nm | TiSi | 2 nm | 80% | 0.7 | 6% | 0.8 | 100 nm |
| 12 | 7 | 12 | 4 nm | TiSi | 2 nm | 85% | 2.1 | 6% | 0.8 | 100 nm |
| 13 | 7 | 12 | 4 nm | TiSi | 2 nm | 90% | 4.2 | 6% | 0.8 | 100 nm |
| 14 | 7 | 12 | 4 nm | TiSi | 2 nm | 98% | 6.3 | 6% | 0.8 | 100 nm |
| 15 | 7 | 12 | 4 nm | TiSi | 1 nm | 95% | 5.6 | 6% | 0.8 | 100 nm |
| 16 | 7 | 12 | 4 nm | Mg₂Si | 2 nm | 95% | 5.6 | 6% | 0.8 | 100 nm |

**Table 2**

| Porous Silicon Negative electrode material | Porous silicon negative electrode material | | Core | First cladding layer | | Second cladding layer | | Third cladding layer | | |
|---|---|---|---|---|---|---|---|---|---|---|
| | D_{V}50 (µm) | BET (m²/g) | Elemental silicon Dv50 (nm) | Mass content of Li₂SiO₃ | Thickness (µm) | Metal compound of silicon | Thickness (nm) | Amorphous carbon Content (%) | Carbon nanotubes Content (%) | Thickness (nm) |
| 17 | 7 | 12 | 4 nm | 95% | 5.6 | TiSi | 2 nm | 6% | 0.8 | 100 nm |
| 18 | 7 | 12 | 4 nm | 95% | 5.6 | TiSi | 5 nm | 6% | 0.8 | 100 nm |
| 19 | 7 | 12 | 4 nm | 95% | 5.6 | TiSi | 10 nm | 6% | 0.8 | 100 nm |
| 20 | 7 | 12 | 4 nm | 95% | 5.6 | TiSi | 50 nm | 6% | 0.8 | 100 nm |
| 21 | 7 | 12 | 4 nm | 95% | 5.6 | TiSi | 60 nm | 6% | 0.8 | 100 nm |
| 22 | 7 | 12 | 4 nm | 95% | 5.6 | TiSi | 2 nm | 4% | 0.8 | 100 nm |
| 23 | 7 | 12 | 4 nm | 95% | 5.6 | TiSi | 2 nm | 8% | 0.8 | 100 nm |
| 24 | 7 | 12 | 4 nm | 95% | 5.6 | TiSi | 2 nm | 6% | 0.5 | 80 nm |
| 25 | 7 | 12 | 4 nm | 95% | 5.6 | Mg₂Si | 2 nm | 6% | 0.8 | 100 nm |
| 26 | 7 | 12 | 4 nm | 95% | 5.6 | None | | 6% | 0.8 | 100 nm |

### II. Preparation of the negative electrode plate

### Negative electrode plate 1:

The coating weight is 10 mg/cm², and a coating weight ratio of the first coating layer to the second coating layer is 70:30; in the first coating layer, the mass contents of a porous silicon negative electrode material 1, graphite, a binder, a dispersant, an SP conductive agent, and a CNT conductive agent are 10%, 85.73%, 2%, 1.2%, 1%, and 0.07% sequentially; and in the second coating layer, the mass contents of a porous silicon negative electrode material 1, graphite, a binder, a dispersant, an SP conductive agent, and a CNT conductive agent are 30%, 65.19%, 2.4%, 1.2%, 1%, and 0.21% sequentially.

The raw materials of the first coating layer are fully stirred and mixed in an appropriate amount of water solvent according to the above weight ratio to form a uniform negative electrode slurry to obtain a first negative electrode slurry; a second negative electrode slurry can be obtained by the same method; the first negative electrode slurry is coated on a surface of a negative electrode current collector copper foil, and the second negative electrode slurry is coated on a surface of the first negative electrode slurry; after drying and cold pressing, a negative electrode plate 1 is obtained, and the surface density M1 of the first film layer and the surface density M2 of the second film layer formed in each negative electrode plate are recorded in Table 2.

The difference between negative electrode plates 2 to 27 and the negative electrode plate 1 only lies in that corresponding porous silicon negative electrode materials 2 to 27 are used in sequence to replace the porous silicon negative electrode material 1 in the negative electrode plate 1.

Negative electrode plates 27 to 36 all use the porous silicon negative electrode material 1, but the amount, surface density, thickness, and film layer percentage mass content thereof in the first film layer and the second film layer are as shown in Table 3. Due to the change in the amount thereof, the amount of graphite is adjusted so that the total mass fraction of the porous silicon negative electrode material 1, graphite, a binder, a dispersant, and an SP conductive agent in the first film layer meets 100%, and the amount of graphite is adjusted so that the total mass fraction of the porous silicon negative electrode material 1, graphite, a binder, a dispersant, an SP conductive agent, and a CNT conductive agent in the second film layer meets 100%.

A negative electrode plate 37 uses the silicon negative electrode material 27 to replace the porous silicon negative electrode material 1 in the negative electrode plate 1.

### Test of the negative electrode plate:

Measurement of the porosity of the negative electrode film layer: The CP cross section is imaged, and scanned with imaging software, the porosity of the corresponding cross section is obtained through calculation, then multiple CP cross sections are scanned and imaged, and the porosity of the negative electrode film layer is obtained through calculation with software.

Thickness: The CP cross section is imaged to measure the thickness.

The weight ratio of the first film layer to the second film layer is denoted as A.

According to the amount of the raw material and the data in Table 1 and 2, the mass m1 and m2 of the porous silicon negative electrode material in the first film layer and the second film layer per 1 cm² of the first film layer and the second film layer is calculated; the percentage mass contents C1 and C2 of the carbon nanotubes belonging to the porous silicon negative electrode material in the first film layer and the second film layer are calculated; and excluding the carbon nanotubes in the porous silicon negative electrode material, the mass of remaining carbon nanotubes in the first film layer and the second film layer are S1 and S2, respectively.

**Table 3**

| | First film laver | | | | | Second film laver | | | | | | Negative electrode film laver | | | | |
|---|---|---|---|---|---|---|---|---|---|---|---|---|---|---|---|---|
| | Mass content (%) of porous silicon negative electrode material | m1 (mg/cm²) | M1 (mg/cm²) | C1 (%) | S1 | Mass content (%) of porous silicon negative electrode material | m2 (mg/cm²) | M2 (mg/cm²) | C2 (%) | S2 | Thickness (µm) | A | Porosity (%) | Mass content (%) of porous silicon negative electrode material | (m2C2+S2)/ M2 or (m1C1+S1)/ M1 | M2(m1C1+S1)/ M1-m2C2 |
| Negative electrode plates 1 to 26 | 10 | 0.70 | 7 | 0.5 | 0.050 | 30 | 0.9 | 3 | 0.21 | 0.0210 | 20 | 7:3 | 25 | 16 | 0.007643 | 0.0210 |
| Negative electrode plate 27 | 50 | 2.50 | 5 | 0.2 | 0.020 | 70 | 3.5 | 5 | 0.5 | 0.0075 | 33 | 5:5 | 70 | 60 | 0.005 | 0.0075 |
| Negative electrode plate 28 | 10 | 0.70 | 7 | 0.3 | 0.050 | 30 | 0.9 | 3 | 0.21 | 0.0204 | 20 | 7:3 | 25 | 16.0 | 16 | 0.007443 |
| Negative electrode plate 29 | 2.5 | 0.18 | 7 | 0 | 0.030 | 70 | 1.225 | 1.75 | 0.3 | 0.0038 | 12 | 8:2 | 25 | 16 | 0.004286 | 0.0038 |
| Negative electrode plate 30 | 14.3 | 1.00 | 7 | 0.4 | 0.040 | 20 | 0.6 | 3 | 0.05 | 0.0186 | 20 | 7:3 | 25 | 16 | 0.006286 | 0.0186 |
| Negative electrode plate 31 | 1.43 | 0.10 | 7 | 0.05 | 0.050 | 50 | 1.5 | 3 | 1 | 0.0065 | 20 | 7:3 | 25 | 16 | 0.00715 | 0.0065 |
| Negative electrode plate 32 | 2 | 0.14 | 7 | 0.02 | 0.040 | 70 | 0.259 | 0.368 | 0.5 | 0.0008 | 2 | 95:5 | 22 | 5.4 | 0.005718 | 0.0008 |
| Negative electrode plate 33 | 5 | 0.35 | 7 | 0.04 | 0.030 | 60 | 0.467 | 0.778 | 0.72 | 0.0000 | 5 | 9:1 | 24 | 10.5 | 0.004306 | 0.0000 |
| Negative electrode plate 34 | 10 | 0.70 | 7 | 0.1 | 0.035 | 30 | 3.15 | 10.5 | 0.7 | 0.0315 | 70 | 2:3 | 32 | 22 | 0.0051 | 0.0315 |
| Negative electrode plate 35 | 10 | 0.70 | 7 | 0.1 | 0.040 | 20 | 3.267 | 16.333 | 2 | 0.0296 | 109 | 3:7 | 26 | 17 | 0.005814 | 0.0296 |
| Negative electrode plate 36 | 0.3 | 0.02 | 7 | 0 | 0.030 | 0.5 | 0.0237 | 4.667 | 0.6 | 0.0199 | 31 | 3:2 | 20 | 0.38 | 0.004286 | 0.0199 |

| | | | | | | | | | | | | | | | | |
|---|---|---|---|---|---|---|---|---|---|---|---|---|---|---|---|---|
| Note: the silicon-based negative electrode materials in the negative electrode plate 37 are all the silicon-based negative electrode material 27. | | | | | | | | | | | | | | | | |

### III. Secondary battery

### Example 1

### Negative electrode plate:

The above negative electrode plate 1 is used as the negative electrode plate of the secondary battery of Example 1.

### Positive electrode plate:

The coating weight is 25.5 mg/cm², a cathode is in single-layer coating, and mass contents of a ternary material NCM811, PVDF, an SP conductive agent, and a CNT conductive agent are 96.5%, 1.5%, 1.5%, and 0.5% sequentially.

The raw materials are fully stirred and mixed in an appropriate amount of NMP solvent in the above weight ratios to form a uniform positive electrode slurry; the positive electrode slurry is coated on a surface of a positive electrode current collector aluminum foil; and the positive electrode plate is obtained after drying and cold pressing.

Electrolyte solution: The electrolyte solution includes a solvent, a lithium salt, and an additive, where the type and content of the solvent are as follows: EC:DMC:DEC=0.3:0.5:0.2, the content of the lithium salt is 1.0 mol/L, and a film-forming additive includes 8% of FEC.

Separator: A PE separator is used as a separator.

The negative electrode plates of the secondary batteries of Examples 2 to 37 are the negative electrode plates 2 to 37 sequentially, and the positive electrode plates, the electrolyte solutions, and the separators are all the same as those of Example 1.

The negative electrode plate of the secondary battery of Comparative Example 1 is the negative electrode plate 38, and the positive electrode plate, the electrolyte solution, and the separator are the same as those of Example 1.

### Test of the gram capacity:

The negative electrode plate and a lithium plate are made into a button-type half-cell for testing, and a charge and discharge test is carried out at 25°C at a rate of 0.04C, with a voltage range of 0.05 V to 2 V. The exerted capacity is tested and the exerted gram capacity of the negative electrode is calculated, where the gram capacity = the test capacity/mass of an active substance.

### Test of the cycling performance:

At 25°C, each of the secondary batteries prepared in the Examples and the Comparative Examples is charged with a constant current at a rate of 1C to a charge cut-off voltage of 4.25 V, then charged with a constant voltage to a current of less than or equal to 0.05C, left to stand for 5 min, then discharged with a constant current at a rate of 1C to a discharge cut-off voltage of 2.8 V, and left to stand for 5 min, which form one charge and discharge cycle. A cyclic charge and discharge test is performed on the battery according to this method until the capacity of the battery is attenuated to 80%. The number of cycles at this moment is denoted as the cycle life of the battery at 25°C.

### Test of the charging capability:

At 25°C, each of the batteries of the above Examples and Comparative Examples is charged and discharged for the first time with a current at a rate of 1C (i.e., the current value when a theoretical capacity is completely discharged in 1 h), which specifically includes: charging the battery with a constant current at a rate of 1C to a voltage of 4.25 V, charging the same with a constant voltage to a current of ≤0.05C, followed by standing for 5 min, and then discharging the battery with a constant current at a rate of 0.33C to a voltage of 2.8 V, followed by recording the actual capacity thereof as C0.

After that, the battery is sequentially charged with a constant current at 1.0C0, 1.3C0, 1.5C0, 1.8C0, 2.0C0, 2.3C0, 2.5C0, and 3.0C0 to a full-battery charge cut-off voltage of 4.25 V or 0 V negative electrode cut-off potential (whichever is reached first). Each time the charging is completed, the battery needs to be discharged at 1C0 to a full-battery discharge cut-off voltage of 2.8 V. The negative electrode potentials corresponding to charging to 10%, 20%, 30%, ..., 80% state of charge (SOC) at different charging rates are recorded. Charging rate-negative electrode potential curves under different SOC states are drawn, and linearly fit to obtain the charging rate corresponding to the negative electrode potential of 0 V under different SOC states. The charging rate is a charging window in this SOC state, and is denoted as C10% SOC, C20% SOC, C30% SOC, C40% SOC, C50% SOC, C60% SOC, C70% SOC, and C80% SOC, respectively. Charging time T in min for charging the battery from 10% SOC to 80% SOC is obtained by calculating according to a formula (60/C20% SOC+60/C30% SOC+60/C40% SOC+60/C50% SOC+60/C60% SOC+60/C70% SOC+60/C80% SOC) x 10%. The shorter the time, the better the fast charging performance of the battery.

The test results are recorded in Table 3.

**Table 3**

| | Negative electrode plate | Cycling performance/cycle @80% SOH | Gram capacity/mAh/g | Charging capability/min (10-80% SOC) |
|---|---|---|---|---|
| Example 1 | Negative electrode plate 1 | 1200 | 494 | 15 |
| Example 2 | Negative electrode plate 2 | 1650 | 494 | 14.3 |
| Example 3 | Negative electrode plate 3 | 1000 | 494 | 16.5 |
| Example 4 | Negative electrode plate 4 | 700 | 494 | 17.8 |
| Example 5 | Negative electrode plate 5 | 300 | 494 | 20 |
| Example 6 | Negative electrode plate 6 | 1580 | 494 | 14.7 |
| Example 7 | Negative electrode plate 7 | 1650 | 494 | 13.6 |
| Example 8 | Negative electrode plate 8 | 800 | 494 | 16.2 |
| Example 9 | Negative electrode plate 9 | 600 | 494 | 16.5 |
| Example 10 | Negative electrode plate 10 | 440 | 494 | 17.2 |
| Example 11 | Negative electrode plate 11 | 1010 | 494 | 15 |
| Example 12 | Negative electrode plate 12 | 1080 | 494 | 14.6 |
| Example 13 | Negative electrode plate 13 | 1120 | 494 | 14.0 |
| Example 14 | Negative electrode plate 14 | 1320 | 494 | 13.5 |
| Example 15 | Negative electrode plate 15 | 1140 | 494 | 15 |
| Example 16 | Negative electrode plate 16 | 1130 | 494 | 15 |
| Example 17 | Negative electrode plate 17 | 1370 | 494 | 15.5 |
| Example 18 | Negative electrode plate 18 | 1470 | 494 | 16 |
| Example 19 | Negative electrode plate 19 | 1590 | 494 | 17 |
| Example 20 | Negative electrode plate 20 | 1050 | 494 | 20.5 |
| Example 21 | Negative electrode plate 21 | 1150 | 494 | 25.8 |
| Example 22 | Negative electrode plate 22 | 1360 | 494 | 14.00 |
| Example 23 | Negative electrode plate 23 | 1020 | 494 | 15.5 |
| Example 24 | Negative electrode plate 24 | 1490 | 494 | 14 |
| Example 25 | Negative electrode plate 25 | 1100 | 494 | 15.5 |
| Example 26 | Negative electrode plate 26 | 860 | 494 | 28.7 |
| Example 27 | Negative electrode plate 27 | 500 | 864 | 14.2 |
| Example 28 | Negative electrode plate 28 | 1150 | 494 | 16.5 |
| Example 29 | Negative electrode plate 29 | 1200 | 494 | 14.5 |
| Example 30 | Negative electrode plate 30 | 1170 | 494 | 17.8 |
| Example 31 | Negative electrode plate 31 | 1250 | 494 | 14.4 |
| Example 32 | Negative electrode plate 32 | 1900 | 405 | 13.5 |
| Example 33 | Negative electrode plate 33 | 1500 | 448 | 13.8 |
| Example 34 | Negative electrode plate 34 | 1100 | 545 | 17 |
| Example 35 | Negative electrode plate 35 | 1175 | 503 | 16.5 |
| Example 36 | Negative electrode plate 36 | 2200 | 363 | 15.5 |
| Comparative Example 1 | Negative electrode plate 37 | 200 | 906 | 30 |

According to the comparison of Examples 1 to 5, it can be seen that the change in the Dᵥ50 of the porous silicon negative electrode material will directly affect the cycling performance and charging capability of the battery, especially as the Dᵥ50 of the porous silicon negative electrode material increases, the charging capability of the battery is reduced.

According to the comparison of Examples 6 to 10, it can be seen that the change in the Dᵥ50 of the elemental silicon will affect the charging capability and cycling performance of the battery. As the Dᵥ50 of the elemental silicon increases, both the cycling performance and charging capability of the battery are reduced.

According to the comparison of Examples 11 to 14, it can be seen that the change in the thickness of the first cladding layer containing lithium silicate will affect the charging capability and cycling performance of the battery. As the thickness of the first cladding layer increases, the cycling performance of the battery is improved, and the charging capability is improved.

According to the comparison of Examples 17 to 20, it can be seen that the change in the thickness of the metal compound of silicon of the second cladding layer will affect the charging capability and cycling performance of the battery. As the thickness of the second cladding layer increases, the cycling performance of the battery is first improved and then reduced, and the charging capability is gradually reduced. This is because the second cladding layer improves the anti-expansion capability of the silicon material and improves the cycling performance. However, the conductivity of the second cladding layer is poor, and the increase in the thickness of the cladding layer will deteriorate the dynamics.

According to the comparison of Examples 1, 17, and 27, it can be seen that different cladding methods have a significant impact on the cycling performance and charging capability of the battery.

According to the comparison between Example 1, Examples 28 to 37, and Comparative Example 1, it can be seen that the increase in the content of the porous silicon negative electrode material in the second film layer helps to improve the charging capability of the battery; and the gram capacity of Example 28 is more prominent because the content of the porous silicon negative electrode in the first film layer is relatively high, and the cycling performance of the battery is reduced also because the content of the porous silicon negative electrode in the first film layer is relatively high.

Although the present application has been described with reference to the preferred Examples, various improvements can be made thereto and components thereof can be replaced with equivalents without departing from the scope of the present application. In particular, the technical features mentioned in the various Examples can be combined in any manner as long as there is no structural conflict. The present application is not limited to the particular Examples disclosed herein, but rather includes all technical solutions falling within the scope of the claims.

## Claims

1. A negative electrode plate, comprising a current collector (01) and a negative electrode film layer, wherein the negative electrode film layer comprises:
a first film layer (02), provided on one side or both sides of the current collector (01); and
a second film layer (03), provided on one side of the first film layer (02) away from the current collector (01);
a negative electrode active material of the first film layer (02) and a negative electrode active material in the second film layer (03) each independently comprise a silicon-based negative electrode material, the silicon-based negative electrode material in the second film layer (03) comprises a porous silicon negative electrode material (10), and a content of the silicon-based negative electrode material in the first film layer (02) is less than a content of the silicon-based negative electrode material in the second film layer (03).

2. The negative electrode plate according to claim 1, wherein a surface density M1 of the first film layer (02) is in a range of 4.5 mg/cm² to 20 mg/cm², and a surface density M2 of the second film layer (03) is in a range of 4.5 mg/cm² to 20 mg/cm²; optionally, a weight ratio of the first film layer (02) to the second film layer (03) is 95:5 to 30:70, and further optionally is 90:10 to 40:60; optionally, a porosity of the first film layer (02) is in a range of 20% to 50%, a porosity of the second film layer (03) is 20% to 70%, and a porosity of the negative electrode film layer is 20% to 70%; and optionally, a thickness of the second film layer (03) is 10 µm to 20 µm.

3. The negative electrode plate according to claim 1 or 2, wherein a mass content of the silicon-based negative electrode material in the first film layer (02) is 0.5% to 50%; and/or a mass content of the porous silicon negative electrode material (10) in the second film layer (03) is 0.5% to 70%; and optionally, a mass content of the porous silicon negative electrode material (10) in the negative electrode film layer is 1% to 60%.

4. The negative electrode plate according to any one of claims 1 to 3, wherein the second film layer (03) comprises the porous silicon negative electrode material (10), a graphite negative electrode material, a binder, a dispersant, and a conductive agent, and the conductive agent comprises one or more of conductive carbon and carbon nanotubes; optionally, a percentage mass content of the porous silicon negative electrode material (10) in the second film layer (03) is 0.5% to 70%; optionally, a percentage mass content of the graphite negative electrode material in the second film layer (03) is 25% to 90%; optionally, a percentage mass content of the binder in the second film layer (03) is 1% to 8%; optionally, a percentage mass content of the dispersant in the second film layer (03) is 0.5% to 2%; optionally, a percentage mass content of the conductive carbon in the second film layer (03) is 0.5% to 5%; and optionally, a percentage mass content of the carbon nanotubes in the second film layer (03) is 0.05% to 2%.

5. The negative electrode plate according to any one of claims 1 to 4, wherein the first film layer (02) comprises the silicon-based negative electrode material, a graphite negative electrode material, a binder, a dispersant, and a conductive agent, and the conductive agent comprises one or more of conductive carbon and carbon nanotubes; optionally, a percentage mass content of the silicon-based negative electrode material in the first film layer (02) is 0.5% to 50%; optionally, a percentage mass content of the graphite negative electrode material in the first film layer (02) is 45% to 97.5%; optionally, a percentage mass content of the binder in the first film layer (02) is 1% to 3%; optionally, a percentage mass content of the dispersant in the first film layer (02) is 0.3% to 1.5%; optionally, a percentage mass content of the conductive carbon in the first film layer (02) is 0 to 3%; optionally, a percentage mass content of the carbon nanotubes in the first film layer (02) is 0 to 0.5%; optionally, the silicon-based negative electrode material comprises any one or more of the group consisting of a silicon material, a silicon-oxide material, and a porous silicon negative electrode material (10), and a content of the porous silicon negative electrode material (10) in the first film layer (02) is less than a content of the porous silicon negative electrode material (10) in the second film layer (03).

6. The negative electrode plate according to any one of claims 1 to 5, wherein Dv₅₀ of the porous silicon negative electrode material (10) is between 3 µm and 20 µm, and optionally is between 4 µm and 15 µm; and/or a BET specific surface area of the porous silicon negative electrode material (10) is between 1 m²/g and 30 m²/g, and optionally is between 6 m²/g and 20 m²/g.

7. The negative electrode plate according to any one of claims 1 to 6, wherein the porous silicon negative electrode material (10) comprises:
a core (11), wherein the core (11) is porous silicon, the porous silicon comprises elemental silicon and a compound of silicon, and the compound of silicon comprises an oxide of silicon; and
a cladding layer, wherein the cladding layer is cladded on a surface of the core (11).

8. The negative electrode plate according to claim 7, wherein the cladding layer comprises any one or more of a metal compound of silicon, lithium silicate, amorphous carbon, and carbon nanotubes.

9. The negative electrode plate according to claim 8, wherein the cladding layer comprises:
a first cladding layer (12), wherein the first cladding layer (12) is cladded on the surface of the core (11), and the first cladding layer (12) comprises lithium silicate;
a second cladding layer (13), wherein the second cladding layer (13) is cladded on a surface of the first cladding layer (12), the second cladding layer (13) comprises a metal compound of silicon, and optionally, metal elements of the metal compound of silicon comprise Ti, Mg, and/or Al; and
a third cladding layer (14), wherein the third cladding layer (14) is cladded on a surface of the second cladding layer (13), the third cladding layer (14) comprises amorphous carbon, and optionally, a material of the amorphous carbon comprises hard carbon and/or soft carbon.

10. The negative electrode plate according to claim 8, wherein the cladding layer comprises:
a first cladding layer (12), wherein the first cladding layer (12) is cladded on the surface of the core (11), and the first cladding layer comprises the lithium silicate; and
a third cladding layer (14), wherein the third cladding layer (14) is cladded on a surface of the first cladding layer (12), the third cladding layer (14) comprises the amorphous carbon, and optionally, a material of the amorphous carbon comprises hard carbon and/or soft carbon.

11. The negative electrode plate according to any one of claims 7, 8, and 10, wherein the compound of silicon further comprises a metal compound of silicon, the metal compound of silicon is cladded on a surface of the elemental silicon, and optionally, metal elements of the metal compound of silicon comprise Ti, Mg, and/or Al.

12. The negative electrode plate according to any one of claims 9 to 11, wherein the third cladding layer further comprises the carbon nanotubes.

13. The negative electrode plate according to claim 12, wherein mass of the porous silicon negative electrode material (10) in the first film layer (02) and the second film layer (03) is m1 and m2, respectively; percentage mass contents of carbon nanotubes belonging to the porous silicon negative electrode material (10) in the first film layer (02) and the second film layer (03) are C1 and C2, respectively; and excluding the carbon nanotubes in the porous silicon negative electrode material (10), mass of remaining carbon nanotubes in the first film layer (02) and the second film layer (03) is S1 and S2, respectively, the first film layer (02) and the second film layer (03) are a first film layer (02) per unit area and a second film layer (03) per unit area respectively, and the following relationships: (m2×C2+S2)/M2=(m1×C1+S1)/M1, m2≥m1, S1>S2, and S2=m1×m2×(C2-C1)/(m2-m1) are satisfied.

14. The negative electrode plate according to any one of claims 7 to 13, wherein Dv50 of the elemental silicon is in a range of 0<Dv50≤10 nm; and optionally, the Dv50 of the elemental silicon is in a range of 2 nm<Dv50≤8 nm.

15. The negative electrode plate according to any one of claims 7 to 14, wherein a chemical formula of the oxide of silicon is SiOx, and in the formula, 0<x≤2; and Dv50 of the oxide of silicon is in a range of 2 µm≤Dv50≤13 µm.

16. The negative electrode plate according to claim 9 or 10, wherein the lithium silicate comprises one or more of Li₂SiO₃, Li₂Si₂O₅, Li₄SiO₄, Li₂Si₃O₇, Li₈SiO₆, Li₆Si₂O₇, Li₄Si₂O₇, Li₂Si₄O₇, and LiSiO₃; and optionally, the lithium silicate comprises at least Li₂SiO₃, and further optionally, mass of the Li₂SiO₃ is at least 50% of mass of the first cladding layer, and more optionally, the mass of the Li₂SiO₃ is at least 70% of the mass of the first cladding layer.

17. The negative electrode plate according to any one of claims 9 to 16, wherein a thickness of the first cladding layer is 10% to 80% of a particle radius of the porous silicon negative electrode material (10), optionally, a thickness of the second cladding layer is 1 nm to 50 nm, and optionally, a thickness of the third cladding layer is 1 nm to 1000 nm, and optionally is 5 nm to 300 nm.

18. A secondary battery, comprising a positive electrode plate, a negative electrode plate, a separator, and an electrolyte solution, wherein the negative electrode plate is the negative electrode plate according to any one of claims 1 to 17.

19. An electrical apparatus, comprising a secondary battery, wherein the secondary battery is selected from the secondary battery according to claim 18.
